# EUROPÄISCHE PATENTSCHRIFT

(11) **EP 2 235 127 B1**
(45) Veröffentlichungstag und Bekanntmachung des Hinweises auf die Patenterteilung: **18.01.2012**
(21) Anmeldenummer: 09703858.2
(22) Anmeldetag: 21.01.2009
(51) Int. Cl.: C09J 7/00

(54) **TRÄGERFOLIE INSBESONDERE FÜR EIN KLEBEBAND UND VERWENDUNG DERSELBEN**
SUPPORT FILM, IN PARTICULAR FOR AN ADHESIVE TAPE AND USE THEREOF
FEUILLE SUPPORT DESTINÉE EN PARTICULIER À UN RUBAN ADHÉSIF ET UTILISATION DE LADITE FEUILLE SUPPORT

(30) Priorität: 22.01.2008 DE 102008005563
(43) Veröffentlichungstag der Anmeldung: 06.10.2010
(73) Patentinhaber: TESA SE, 20253 Hamburg (DE)
(72) Erfinder: RODEWALD, Ilse, Charlotte, NC 28210 (US); MÜSSIG, Bernhard, 21218 Seevetal (DE); MICHEL, Uwe, Comstock Park 49321 Michigan (US)
(86) Internationale Anmeldenummer: PCT/EP2009/050610
(87) Internationale Veröffentlichungsnummer: WO 2009/092715

(56) Entgegenhaltungen:
- EP-A- 0 969 433
- WO-A-01/17775
- WO-A-02/051626
- WO-A-03/091354
- DE-A1- 19 939 076

## Beschreibung

Die Erfindung betrifft eine Trägerfolie insbesondere für ein Klebeband und Verwendung derselben.

Folien mit hoher Längsfestigkeit erreicht man üblicherweise durch Verstrecken von extrudierten Folienbahnen aus teilkristallinen Thermoplasten. Dabei handelt es sich überwiegend um eine biaxiale Verstreckung. Im Ausnahmefall sind die Folien zur weiteren Erhöhung der Längszugfestigkeit nur in Längsrichtung verstreckt. Sowohl marktübliche biaxial als auch monoaxial verstreckte Folien auf Basis von Polypropylen weisen aber im Gegensatz zu unverstreckten Folien aus dem Blas- oder Cast-Verfahren geringe Weiterreißwiderstände in Querrichtung auf.

In der Praxis führt dies im Falle von verletzten Kanten von Folie oder Klebeband (bedingt durch stumpfe Messer beim Schneiden oder späterer unbeabsichtigter Verletzung der Schnittkante) leicht zum Ein- oder Abreißen der Folie beziehungsweise des daraus hergestellten Klebebandes unter Zugbelastung.

Bei hohen Anforderungen an Zugfestigkeit und Weiterreißwiderstand werden Folien beziehungsweise Klebebänder mit Filamenten oder Netzen aus Filamenten aus Glas oder Kunststoff verstärkt. Die Herstellung solcher Filamentklebebänder ist anlagenseitig sehr aufwändig und damit teuer und störanfällig. Neben der Basisfolie werden zusätzlich noch die Filamente und Laminierkleber (beziehungsweise eine zusätzliche Haftkleberbeschichtung) benötigt, was die Produkte weiter verteuert. Weitere Nachteile solcher Filamentklebebänder sind geringe Knickbruchbeständigkeit, hohe Dicke, unsaubere Schneidkanten und fehlende Durchschweissbarkeit und Recyclingfähigkeit. Die Herstellung eines derartigen Klebebands wird zum Beispiel in der US 4,454,192 A1 beschrieben.

Die DE 21 04 817 A1 beschreibt ein Verfahren zur Herstellung eines Klebebandträgers aus Polyolefin (Polyethylen oder Polyethylen). Durch Verstreckung in Längsrichtung soll eine Zugfestigkeit in Längsrichtung von 320 N/mm² erreicht werden können (gemäß Anspruch 2, kein Beispiel vorhanden). Reckverhältnis und erreichte Spannung bei 10 %-Dehnung werden nicht offenbart.

Gegenstand EP 0 255 866 A1 ist eine in Längsrichtung oder biaxial gereckte Polypropylenfolie. Der Zusatz von elastomeren Komponenten erhöht die Schlagzugzähigkeit in Querrichtung. Diese Maßnahme führt allerdings zu einer Verschlechterung der Zugfestigkeit und des Weiterreißwiderstands in Querrichtung. Das Reckverhältnis in Längsrichtung beträgt 1:5,5 bis 1:7. Es werden Zugfestigkeiten von 12 bis 355 N/mm² erreicht. Angaben über die Spannungen bei 10 %-Dehnung werden nicht gemacht.

Ende der 80er Jahre wurde von der Firma Beiersdorf (Hamburg) ein Aufreißstreifen vertrieben, welcher eine verringerte Abreißneigung aufweist. Dieser enthielt eine in Längsrichtung verstreckten Trägerfolie der Firma NOPI (Harrislee), welche durch Coextrusion von Rohstoffen unterschiedlicher Zähigkeit hergestellt wurde und ein Reckverhältnis von 1:7,5 aufwies. Die zähe Coextrusionsaußenschicht verringert nach dem Prinzip von Impactmodifieren die Ausbildung von Mikrorissen beim Schneiden des Produktes mit scharfen Klingen. Sie vermeidet jedoch nicht Abrisse bedingt durch nachträglich verletzte Kanten (zum Beispiel beim Transport der Rolle oder der Applikation auf den Karton), dies erfordert einen erheblich höheren Weiterreißwiderstand. Die Außenschicht enthält 60 Gew.-% Polypropylencopolymer mit ca. 5 Gew.-% Ethylen und zur Erhöhung der Zähigkeit 40 Gew.-% SBS-Kauschuk, welcher die Lichtbeständigkeit verschlechtert und vor allem zu verringerter Zugfestigkeit (160 N/mm²) und verringerter Spannung bei 10 %-Dehnung (70 N/mm²) der Folie in Längsrichtung führt. Die weniger zähe Hauptschicht enthält 92 Gew.-% des Polypropylencopolymers und 8 Gew.-% des SBS-Kautschuks.

Die DE 44 02 444 A1 betrifft ein reißfestes Klebeband auf der Basis von monoaxial orientiertem Polyethylen. Es können in mancher Hinsicht ähnliche mechanische Eigenschaften wie bei entsprechenden Polypropylenprodukten erreicht werden. Polyethylen weist jedoch ein bedeutend geringere Wärmebeständigkeit als Polypropylen auf, die sich sowohl bei der Herstellung des Klebebandes (Trocknung von Klebstoff- oder anderen Schichten im Ofen) nachteilig auswirkt als auch bei den späteren Verpackungsanwendungen als Griffband, Kartonverschlussklebeband, Aufreißstreifen oder Kartonverstärkungsstreifen. Die Klebebänder auf den Kartons werden oft heiß, zum Beispiel beim Durchgang durch Druckmaschinen oder nach der Befüllung mit heißen Gütern (zum Beispiel Lebensmitteln). Ein weiterer Nachteil von (auch verstreckten) Polyethylenfolien im Vergleich zu Polypropylenfolien ist die deutlich geringere Kraft bei 10-% Dehnung. Durch die höhere Dehnung bei gegebener Kraft neigen daraus hergestellte Griffbänder oder Kartonverschlussklebebänder zur Ablösung unter Zugbelastung, und Kartonverstärkungsstreifen können das Einreißen von Kartons nicht verhindern. Das Reckverhältnis in Längsrichtung und erreichbare Spannungen bei 10 %-Dehnung werden nicht offengelegt. Es werden Zugfestigkeiten von 102 bis 377 N/mm² erreicht.

Die EP 0 871 567 A1 betrifft eine Folie auf der Basis von monoaxial orientiertem Polyethylen für Etikettenanwendungen. Durch den Einsatz von PP-RC wird eine hohe Transparenz erreicht, jedoch werden jeweils geringe Wärmebeständigkeit, Zugfestigkeit und Spannung bei 10 %-Dehnung erzielt, was für Etikettenanwendungen im Gegensatz zu Klebebändern nur von geringer Bedeutung ist.

Die vorbeschriebenen Erfindungen haben Anwendungen gefunden, konnten aber die Zugfestigkeiten und Weiterreißwiderstände von Filamentklebebändern bei weitem nicht erreichen. Infolgedessen hat es Bemühungen gegeben, das aufwändige Aufbringen vieler Filamentfäden zu vermeiden und den verstreckten Folien durch Längsstrukturen filamentartige Eigenschaften zu geben, welche nachfolgend beschrieben sind.

Die US 5,145,544 A1 und die US 5,173,141 A1 beschreiben ein Klebeband aus monoaxial verstreckter Folie, welche eine Rippenstruktur zur Verstärkung aufweist, wobei die Rippen zum Teil aus der Oberfläche herausragen und zum Teil in die Folienoberfläche eingebettet sind. Zwischen Folie und Rippen sind Kerbfugen ausgebildet. Die Erfindung erreicht einen hohen Seiteneinreißwiderstand, die Zugfestigkeit und die Dehnbarkeit hingegen sind noch verbesserungswürdig. Der wesentliche Mangel besteht jedoch darin, dass eine Folie gemäß dieser Erfindung nicht im Produktionsmaßstab herstellbar ist. Die Ursache dafür sind die schlechte Verstreckbarkeit in üblicher Breite sowie eine extrem schlechte Planlage, so dass die Beschichtbarkeit mit Haftkleber nicht mehr gewährleistet ist. Bei hohen Breiten verschlechtert sich zudem die Planlage auch noch durch ungleichmäßige und unzureichende Haftung (bedingt durch die nicht plan aufliegende Folie) auf den Reckwalzen im nachfolgenden Verstreckungsprozess. Bei einer Herstellung in produktionsüblicher Breite wird die Folie im mittleren Bereich auf den Reckwalzen in Querrichtung gehalten, wodurch sich die Rippenstruktur durch Verstrecken verändert und die gesamte Produktqualität inhomogen wird. Ein weiterer Nachteil ist die Notwendigkeit einer mindestens 50 %igen Einbettung der Rippen durch einen Kalander, welcher in der Investition sehr teuer ist und den Prozess viel aufwändiger macht. Die Rippenstruktur an der Oberfläche führt auch leicht zu Beschichtungsfehlern beim Auftragen von Releasemitteln oder Primern bei der Weiterverarbeitung zu Klebebändern, da die Auftragsverfahren für Folien eine glatte Oberfläche erfordern. Abdrücke von Verstärkungsfilamenten oder Rippenstrukturen in der Oberfläche von Folien sind für die Bedruckung nachteilig, die glatte Oberflächen voraussetzt. Insbesondere bei einer Nutzung der erfindungsgemäßen Folie für ein Verpackungsklebeband ist die Bedruckbarkeit für den Kunden ein wichtiges Kriterium. Der US 5,145,544 A1 werden ein Reckverhältnis von 1:7 und Zugfestigkeiten von 157 bis 177 N/mm² entnommen, Spannungen bei 10 %-Dehnung werden nicht ermittelt. Der US 5,173,141 A1 werden Reckverhältnisse von 1:6,1 bis 1:7 und Zugfestigkeiten bis zu 245 N/mm² entnommen, Spannungen bei 10 %-Dehnung werden nicht ermittelt.

Die EP 1 101 808 A1 versucht, die genannten Nachteile zu beseitigen, indem die Rippenstrukturen in das Innere der Folie verlegt wurden. Die Folie weist planparallele Außenseiten auf und enthält mindestens zwei coextrudierte Schichten unterschiedlicher Zusammensetzung, deren Grenzfläche nicht eben ist, sondern im Querschnitt einen nicht geraden Grenzverlauf aufweist, der sich in Längsrichtung laminar fortsetzt. Die besondere innere Struktur der Folie beruht darauf, dass die Dicke einer Schicht in Querrichtung periodisch oder unregelmäßig variiert und die zweite Schicht die Dickenschwankungen derart kompensiert, dass die Gesamtdicke im Wesentlichen konstant ist. Alle genannten Erfindungen weisen gegenüber einer normalen Klebebandfolie verbesserte Zugfestigkeit und E-Modul in Längsrichtung auf. Die Reckverhältnisse liegen zwischen 1:6,7 und 1:8,7. An Zugfestigkeiten werden 202 bis 231 N/mm² und an Spannungen bei 10 %-Dehnung 103 bis 147 N/mm² erreicht.

Die EP 0 353 907 A1 wendet die Idee des Fibrillierens von Folien an. Bei dieser Erfindung wird ein Klebeband, welches aus einer Trägerschicht, die mit einer weiteren Schicht einer fibrillierten Polymerfolie verklebt wird, hergestellt. Anschließend wird die fibrillierte Seite mit Klebemasse beschichtet. Die zu fibrillierende Polymerfolie wird vorzugsweise extrudiert, besteht aus Polypropylen und wird anschließend in Maschinenrichtung monoaxial gereckt. Dieses ebenfalls sehr aufwändige Verfahren hat den Nachteil, dass das Laminat in vier Prozessschritten (Extrudieren, Reckung, Fibrillieren und Verklebung der Fibrillen auf der PP-BO-Trägerfolie) hergestellt werden muss. Die Dicke der Folien der EP 0 353 907 A1 liegt bei ca. 25 µm (PP-BO) und ca. 5 µm (verstreckte PP-Folie). Daher können nur Reißfestigkeiten von 99 bis 176 N/cm und Weiterreißwiderstände von 15 bis 22 N/cm bei erreicht werden.

Alle diese Erfindungen werden nicht großtechnisch umgesetzt, da die Herstellverfahren sehr aufwändig sind. Des Weiteren können sie die Eigenschaften von Produkten mit Glas- oder Polyestefilamenten bei weitem nicht erreichen.

Das Reckverhältnis handelsüblicher monoaxial verstreckter Polypropylenfolien, die als Träger in einem Klebeband Verwendung finden, liegt bei ungefähr 1:7.

Erhöht man das Reckverhältnis, um die Zugfestigkeit und die Spannung bei 10 %-Dehnung zu erhöhen, stellt man fest, dass ab einem Reckverhältnis von 1:8 eine Schädigung der Folie durch eine Trennlackierung auf Basis von Polyvinylstearylcarbamat in Toluol auftritt. Die trennlackierte Folienoberfläche ist gegen Reibung empfindlich. Reibt man mit einem Radiergummi auf der lackierten Oberfläche, zerfällt diese zu feinen Fasern. Ausfaserungen der Oberfläche durch Reibung in Beschichtungs- oder Schneidanlagen können schon beim Abrollen des Klebebandes zu Delamination der Folie ("shredding") führen.

In der Praxis werden des Weiteren Kartons mit Klebebändern zum Verstärken oder Aufreißen gestapelt. Beim Herausziehen einzelner ungefalteter Karton aus dem Stapel tritt eine Reibung gegen das Klebeband auf. Weiterhin tritt Reibung bei der Verarbeitung der Kartons in Verpackungsstraßen auf. Solche praxisnahen Reibungen führen zur Herauslösung von Polypropylenfasern aus der Oberfläche.

Der Grad der Schädigung nimmt dabei mit steigendem Reckverhältnis (zum Beispiel 1:10) zu.

Handelsübliche monoaxial verstreckte Polypropylenfolien für Klebebänder werden aus Polypropylen mit einem Biegemodul von ca. 1200 MPa oder einer Mischung aus einem härterem Polypropylen und PE-LLD mit einem ähnlichen (gewichtetet berechneten) Biegemodul hergestellt. Versucht man, die Kraft bei 10 %-Dehnung durch Einsatz von Polypropylen mit höherem Biegemodul als üblich anzuheben, stellt man fest, dass auch durch diese Maßnahme eine Schädigung der Folie durch Trennlackierung auftritt. Dies wird bei Folien aus Polypropylenrohstoffen mit einem Biegemodul ab 1600 MPa sehr deutlich und besonders extrem ab einem Biegemodul von 2000 MPa.

Verwendet man eine Trennlackierung auf Silikonbasis ist die Auswirkung noch gravierender. Die Folie wird durch Silikon noch stärker geschädigt als durch Polyvinylstearylcarbamat. Zum einen tritt die Schädigung schon bei geringeren Reckverhältnissen als 1:8 auf, und zum anderen ist die Beschädigung der Folie nicht nur auf der Seite der Beschichtung, sondern sogar auch auf der gegenüberliegenden Seite zu beobachten, als wenn das Silikon durch die Folie hindurchwanderte.

Aufgabe der Erfindung ist es, eine Trägerfolie insbesondere für ein Klebeband zur Verfügung zu stellen, die einerseits einen sehr hohen Zugmodul beziehungsweise eine sehr hohe Spannung bei 10 %-Dehnung in Längsrichtung aufweist, die durch eine Trennlackierung insbesondere auch durch eine solche auf Silikonbasis nicht geschädigt wird und die die genannten Nachteile der Folien des Standes der Technik nicht aufweist.

Gelöst wird diese Aufgabe durch eine Folie, wie sie im Hauptanspruch näher gekennzeichnet ist. In den Unteransprüchen sind vorteilhafte Ausführungsformen der Erfindung beschrieben. Des Weiteren ist die Verwendung der erfindungsgemäßen Folie vom Erfindungsgedanken umfasst.

Demgemäß betrifft die Erfindung eine Trägerfolie insbesondere für ein Klebeband, die monoaxial in Längsrichtung verstreckt ist und die eine Basisschicht aus Polypropylen und eine Coextrusionsschicht aus Polyethylen enthält, wobei die Spannung in Längsrichtung bei 10 %-Dehnung mindestens 150 N/mm², vorzugsweise mindestens 200 N/mm², besonders bevorzugt mindestens 250 N/mm² beträgt und auf der außen liegenden Seite der Coextrusionsschicht eine Trennlackierung aufgebracht ist.

Übliche monoaxial verstreckte Folien werden mit einer Trennlackierung (Releasebeschichtung) versehen, damit ein unter Verwendung dieser hergestelltes Klebeband leicht und ohne Schädigung der Folie abrollbar ist. Bei derart hochmoduligen Folien führen Trennlackierungen jedoch zur Schädigung der Oberfläche durch Ausfaserungen. Toluol als gängiges Lösungsmittel für Trennlackierungen (Releasemittel) allein hat eine schädigende Wirkung, diese wird durch Releasemittel wie Polyvinylstearylcarbamat weiter verstärkt. Besonders stark schädigend verhalten sich Silikone, in diesem Fall wird sogar die Folienunterseite (die der Trennlackierung abgewandten Seite) empfindlich gegen Ausfaserungen. Ausfaserungen führen bei Abrollen des Klebebandes zu Delamination der Folie ("shredding"). In der vorliegenden Erfindung können diese negativen Effekte durch zusätzliche eine Coextrusionsschicht aus Polyethylen verhindert werden.

Die Trägerfolie kann analog dem relativ einfachen Extrusionsverfahren für monoaxial verstreckte Polypropylen-Folien hergestellt werden. Sie weist eine erhöhte Spannung bei 10 %-Dehnung und Zugfestigkeiten in Längsrichtung auf, die zwischen denen von konventionellen monoaxial verstreckten Polypropylenfolien und denen von faserverstärkten Trägern für Filamentklebebänder liegen, wobei jedoch das aufwändige Verfahren zur Herstellung von Filamentklebebändern vermieden werden kann.

Die am häufigsten verwendete Polypropylenfolie für Klebebänder ist PP-BO (biaxial verstreckte Polypropylenfolie). Diese weisen sehr geringe Spannungen bei 10 %-Dehnung auf.

Zur Erzielung von hohen Zugfestigkeiten und von hohen Spannungen bei 1 %- und 10 %-Dehnung sollten die Reckprozessbedingungen so gewählt werden, dass das Reckverhältnis das für Folie jeweils maximal technisch durchführbare ist. Erfindungsgemäß liegt das Reckverhältnis in Längsrichtung bei mindestens 1:8, vorzugsweise bei mindestens 1:9,5

Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Geeignete Polypropylenfolienrohstoffe für die Basisschicht dieser Erfindung sind kommerziell erhältliche Polypropylenpolymere. Der Schmelzindex soll im für Flachfolienextrusion geeigneten Bereich liegen. Der Schmelzindex sollte zwischen 0,3 und 15 g/10 min, vorzugsweise im Bereich von 0,8 und 5 g/10 min (gemessen bei 230 °C/2,16kg) liegen.

Vorzugsweise wird für den erfindungsgemäßen Gegenstand ein Polypropylen mit einem Biegemodul von mindestens 1600MPa, besonders bevorzugt mindestens 2000 MPa eingesetzt.

Um möglichst hohe Werte von Spannungen bei 1 %- und 10 %-Dehnung und von Zugfestigkeiten zu erreichen, ist der Einsatz von hochisotaktischem Polypropylen oder die Verwendung von Nucleierungsmittel vorteilhaft. Es kommen alle für Polypropylen geeigneten Nucleierungsmittel (α- oder β-Kristalle) in Frage.

Dies sind organische Nucleierungsmittel wie zum Beispiel Benzoate, Phosphate oder Sorbitolderivate. Derartige Nucleierungsmittel werden zum Beispiel im Kapitel "9.1. Nucleating Agents" in Ullmann's Encyclopedia of Industrial Chemistry (Auflage 2002 vom Wiley-VCH Verlag, Article Online Posting Date June 15, 2000) oder in den Beispielen der US 2003/195300 A1 beschrieben. Eine weitere besonders geeignete Methode ist die Verwendung eines semikristallinen verzweigten oder gekuppelten polymeren Nucleierungsmittel, wie es in US 2003/195300 A1 beschrieben ist, zum Beispiel ein mit 4,4'-Oxydibenzolsulfonylazid modifiziertes Polypropylen.

Die Basisschicht kann weitere Polymere, insbesondere Polyolefine enthalten. Bevorzugt wird ein möglichst hoher Anteil an Polypropylen oder Polypropylenen, besonders bevorzugt kein Zusatz weiterer Polymere.

Die Trägerfolie weist an den Oberflächen vorzugsweise keine Rippenstrukturen auf, da sie die Haftung während des Reckvorgangs verschlechtern und keine homogene Verstreckung ermöglichen. Auch im Inneren sind bevorzgut keine Rippenstrukturen vorgesehen, sondern die Schichten sind planparallel ausgerichtet. In diesem Fall muss keine aufwändige und störanfällige Düse bereitgestellt werden.

Des Weiteren enthält vorzugsweise die Trägerfolie keine Carbonnanotubes.

Das Problem der Herauslösung von Fasern aus der trennlackierten Oberseite kann für den Fachmann unerwartet und überraschenderweise durch eine Coextrusionsschicht aus Polyethylen gelöst werden.

Geeignete Polyethylene für die Coextrusionsschicht sind PE-LD, PE-LLD, PE-VLLD und PE-HD. Das Polyethylen kann in geringerer Menge weitere Monomere wie Propen, Buten, Hexen, Octen, Ethylacrylat oder Vinylacetat enthalten. Bevorzugt werden Ethylenhomopolymere wie PE-LD oder insbesondere PE-HD.

Vorzugsweise wird zur Verbesserung der Haftung zwischen den beiden Schichten (Basisschicht und Coextrusionsschicht) in der Coextrusionsschicht ein polypropylenverträgliches Polymer zugefügt wie zum Beispiel ein propylenhaltiges Polymer, Polybuten-(1) oder hydriertes Styrol-Dien-Blockcopolymer wie SEBS, SEPS oder SEBE.

Der Anteil an Polyethylen in der Coextrusionsschicht liegt vorzugsweise zwischen 50 und 100 Gew.-%, besonders bevorzugt zwischen 60 und 80 Gew.-%.

Die Trennlackierung wird auf der erfindungsgemäß vorgesehenen Coextrusionsschicht appliziert, die Folie kann jedoch noch weitere durch Coextrusion hergestellte identische oder abweichende Schichten aufweisen.

Es wird vermutet, dass bei der angewandten Verstreckungstemperatur die Basisschicht aus Polypropylen eine Faserstruktur mit hohem Modul ausbildet, die Coextrusionsschicht aus Polyethylen aber nicht. Es scheint, dass die Faserzwischenräume die Trennlackierung aufsaugen können, welche dann permanent eine Trennwirkung zwischen den Fasern hervorruft, da das Lösungsmittel allein keine so drastische Schädigung hervorruft. Die Coextrusionsschicht kann vermutlich mangels signifikanter Faserstruktur mit Faserzwischenräumen die Trennlackierung nicht aufsaugen.

Die Schichten können neben den Polymeren Additive wie Antioxidantien, Lichtschutz-, Antiblock-, Gleit- und Verarbeitungshilfsmittel, Füllstoffe, Farbstoffe und Pigmente enthalten.

Die Trägerfolie weist durch Wahl von Reckverhältnis, Verstreckungstemperatur und/oder des Biegemoduls des Polypropylens eine Spannung bei 10 %-Dehnung in Längsrichtung von mindestens 150 N/mm², von vorzugsweise mindestens 200 N/mm², von besonders bevorzugt mindestens 250 N/mm² auf.

In einer bevorzugten Ausführung besitzt die Trägerfolie beziehungsweise ein unter Verwendung der Trägerfolie hergestelltes Klebeband in Längsrichtung (Maschinenrichtung) eine Spannung bei 1 %-Dehnung von mindestens 20 N/mm², vorzugsweise mindestens 40 N/mm² und/oder eine Zugfestigkeit von mindestens 300 N/mm², vorzugsweise mindestens 350 N/mm² auf. Der Weiterreißwiderstand in Querrichtung soll vorzugsweise mindestens 80 N/mm, insbesondere mindestens 220 N/mm erreichen. Zur Berechnung von Festigkeitswerten werden die breitenbezogenen Kraftwerte durch die Dicke geteilt. Im Fall einer Bestimmung der Festigkeitswerte am Klebeband wird als Dicke nicht die Gesamtdicke des Klebebands, sondern nur die der Trägerfolie zugrunde gelegt.

Die Dicke der Trägerfolie liegt vorzugsweise zwischen 25 und 200 µm, besonders bevorzugt zwischen 40 und 140 µm, ganz besonders bevorzugt zwischen 50 und 90 µm.

Die Dicke der Coextrusionsschicht beträgt vorzugsweise 3 bis 20 %, besonders bevorzugt 5 bis 10 % der Gesamtfoliendicke. Die Dicke der Coextrusionsschicht wird erfindungsgemäß so gering wie möglich gewählt, da sie einen negativen Beitrag zur Spannung bei 1 %- und 10 %-Dehnung und zur Zugfestigkeit liefert aufgrund der Tatsache, dass diese Schicht aus einem Material besteht, das schwächere mechanische Daten als die Rohstoffe der Basisschicht aufweist.

Die Schicht unterbindet aber das Eindringen von Releasemittel der Trennlackierung in die Basisschicht.

Die Dicke der Coextrusionsschicht ist selbstverständlich aus technischen Gründen nach unten begrenzt, damit sie innerhalb der Dickenschwankung nicht Null wird, also im schlimmsten Fall stellenweise völlig fehlt.

Die Folie kann durch Kaschierung, Prägung oder Strahlenbehandlung modifiziert sein. Die Folien können mit Oberflächenbehandlungen versehen sein. Dies sind zum Beispiel zur Haftvermittlung Corona-, Flamm-, Fluor- oder Plasmabehandlung oder Beschichtungen von Lösungen oder Dispersionen oder flüssige strahlenhärtbare Materialien.

Die Trägerfolie beinhaltet eine sich auf der Coextrusionsschicht befindliche Trennlackung (Release-, Antihaftbeschichtung), zum Beispiel solche aus Silikon, Acrylaten (zum Beispiel Primal® 205), Stearylverbindungen wie Polyvinylstearylcarbamat oder Chromstearatkomplexen (zum Beispiel Quilon® C) oder Umsetzungsprodukten aus Maleinsäureanhydridcopolymeren und Stearylamin. Bevorzugt wird eine Trennlackung auf Silikonbasis. Das Silikon kann lösungsmittelfrei oder lösungsmittelhaltig aufgetragen werden und durch Strahlen, eine Kondensations- oder Additionsreaktion oder physikalisch (zum Beispiel durch eine Blockstruktur) vernetzt sein.

Besonders vorteilhaft lässt sich die erfindungsgemäße Trägerfolie in einem Klebeband verwenden, indem auf die Trägerfolie zumindest einseitig eine Klebemasse aufgebracht wird.

Als Klebeband wird erfindungsgemäß eine Folie mit einer selbstklebenden oder einer hitzeaktivierbaren Klebstoffschicht bevorzugt. Vorzugsweise handelt es sich jedoch nicht um siegelfähige Klebstoffe, sondern um Haftkleber. Die Trägerfolie wird für die Klebebandanwendung einseitig mit Haftkleber als Lösung oder Dispersion oder 100 %ig (zum Beispiel aus der Schmelze) oder durch Coextrusion mit der Trägerfolie beschichtet. Die Klebstoffschicht befindet sich auf der Folienseite mit der Basisschicht. Die Klebeschicht kann durch Wärme oder energiereiche Strahlen vernetzt und erforderlichenfalls mit Trennfolie oder Trennpapier abgedeckt werden. Geeignete Haftkleber sind insbesondere Haftkleber auf Basis Acrylat, Naturkautschuk, thermoplastischem Styrolblockcopolymer oder Silikon.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder ß-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind solche, wie sie in dieser Schrift für die Stabilisierung der Folie aufgeführt werden.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Gemäß bevorzugter Ausführungsformen enthält der Haftkleber helle und transparente Rohstoffe. Besonders bevorzugt sind Acrylathaftkleber (zum Beispiel als Dispersion) oder Haftkleber aus Styrolblockcoplymer und Harz (zum Beispiel wie sie für Schmelzhaftkleber üblich sind).

Die Beschichtungsstärke mit Klebemasse liegt vorzugsweise im Bereich von 18 bis 50 g/m², insbesondere 22 bis 29 g/m². Die Breite der Klebebandrollen liegt vorzugsweise im Bereich von 2 bis 60 mm.

Die Folie kann zum Beispiel als Träger für ein Klebeband verwendet werde. Ein solches Klebeband ist zur Verstärkung von Kartonagen insbesondere im Bereich von Stanzungen, als Aufreißstreifen für Kartons, als Tragegriff, zur Palettensicherung und zum Bündeln von Gegenständen geeignet. Solche Gegenstände sind zum Beispiel Rohre, Profile oder gestapelte Kartons (Strapping-Anwendung).

Im Vergleich zu EP 0 353 907 A1 wird die Trägerfolie in nur zwei Schritten (Extrudieren, Recken) in-line an einer Anlage hergestellt und weist zusätzlich noch sehr viel höhere Weiterreißwiderstände in Querrichtung (ca. 300 N/cm bei 70µm Dicke) auf.

### Prüfmethoden

Dicke: DIN 53370

Zugfestigkeit: DIN 53455-7-5 in Längsrichtung

Spannung 1 % oder 10 %-Dehnung: DIN 53455-7-5 in Längsrichtung

Bruchdehnung: DIN 53455-7-5 in Längsrichtung

Schmelzindex: DIN 53735
- Der Schmelzindex "Melt Flow Ratio" (MFR) wird gemäß DIN 53735 gemessen. Für Polyethylene werden Schmelzindices meistens angegeben in g/10 min bei 190 °C und einem Gewicht von 2,16 kg, für Polypropylene entsprechend, allerdings bei einer Temperatur von 230°C.

Biegemodul (Flexural Modulus): ASTM D 790 A

Dichte: ASTM D 792

Kristallitschmelzpunkt: Bestimmung durch DSC nach ISO 3146

Nomenklatur der Kunststoffe: ISO 1043-1

Reibungstest:
- 10 Hübe mit einem Radiergummi Edding A 20 mit einer abgerundeten Ecke (Kurvenradius = 5 mm) in Maschinenrichtung mit einem Andruck von 5 Kilopond auf der releasebeschichteten Seite.
   Bewertung: pass = kein Abrieb,
   fail = Fasern werden aus der Oberfläche herausgerieben
Klebtechnische Daten: AFERA 4001 entsprechend DIN EN 1939

Im Folgenden soll die Erfindung anhand von Beispielen erläutert werden, ohne diese dadurch einzuschränken.

### Beispiele

### Rohstoffe

Dow 7C06: PP-BC:
MFI 1,5 g/10 min, nicht nucleiert, Biegemodul 1280 MPa, Kristallitschmelzpunkt 164 °C (Dow Chemical)

Moplen HP 501 D:
im Datenblatt als Homopolymer bezeichnet, ist jedoch nach Auskunft des Herstellers ein Copolymer mit 1,5 Gew.-% Ethylen, MFI 0,7 g/10 min, nicht nucleiert, Biegemodul 1450 MPa, Kristallitschmelzpunkt 161 °C (Basell)

Dow Inspire 404.01:
Polypropylen, MFI 3 g/10 min, nucleiert, Biegemodul 2068 MPa nucleiert (mit einem polymeren Nucleierungsmittel entsprechend der US 2003/195300 A1), Kristallitschmelzpunkt 164°C (Dow Chemical)

HTA 108:
PE-HD, MFI 0,7 g/10 min, nicht nucleiert, Biegemodul ca. 1800 MPa, Dichte 0,961 g/cm³, Kristallitschmelzpunkt 133,5 °C (Exxonmobil)

Dowlex 2032:
PE-LLD, MFI 2,0 g/10 min, Dichte 0,9260 g/cm³, Kristallitschmelzpunkt 124°C (Dow Chemical)

ADK STAB NA-11 UH:
Nucleierungsmittel (Adeka Palamarole)

Remafingelb HG AE 30:
PP-Farbmasterbatch mit transluzentem Pigment (Clariant Masterbatches)

Release Coat RA95D:
PVSC = Polyvinylstearylcarbamat (k+k-Chemie)

Dehesive 940A:
Silikonlösung (Wacker Chemical)

Crosslinker V24:
Vernetzer(Wacker Chemical)

Catalyst OL:
Katalysator (Wacker Chemical)

### Beispiel 1

Eine zweischichtige Folie wird auf einer Einschneckenextrusionsanlage mit Flachdüse mit flexibler Düsenlippe coextrudiert, gefolgt von Chillrollstation und einer einstufigen Kurzspaltreckanlage. Die Basisschicht besteht aus Inspire D 404.01 und die Coextrusionsschicht zu 68 Gew.-% aus Dowlex 2032 und zu 32 Gew.-% aus Dow 7C06. Die Düsentemperatur beträgt 235°C. Chillroll-Temperaturen and Reckwalzen-Temperaturen werden so eingestellt, dass die Kristallinität der Folie vor und nach dem Reckvorgang so hoch wie möglich wird. Das Reckverhältnis beträgt 1:10.

Prüfergebnisse:

| Folieneigenschaften: | |
|---|---|
| Trägerdicke nach Reckung | 75 µm |
| Dicke der Basisschicht | 70 µm |
| Dicke der Coextrusionsschicht | 5 µm |
| Spannung bei 1 % Dehnung | 66 N/mm2 |
| Spannung bei 10 % Dehnung | 270 N/mm2 |
| Zugfestigkeit | 297 N/mm2 |
| Bruchdehnung | 8% |
| Reibungstest | pass |

Die Folie wird beidseitig coronavorbehandelt, auf der Coextrusionsschicht mit einer 0,5 %igen Lösung von Release Coat RA95D in Toluol als Release beschichtet und getrocknet. Der Klebstoff wird aus 42 Gew.-% SIS-Elastomer, 20 Gew.-% Pentaerythritester des hydrierten Kolophoniums, 37 Gew.-% eines C₅-Kohlenwasserstoff-harzes mit einem R&B-Wert von 85 °C und 1 Gew.-% Antioxidants Irganox® 1010 in der Schmelze gemischt und bei 150°C mit einer Düse auf die Folienunterseite aufgetragen. Anschließend wird das Klebeband zur Mutterrolle gewickelt und zur weiteren Prüfung in 15 mm Breite geschnitten.

Klebtechnische Daten:
- Klebkraft auf Stahl 2,2 N/cm
- Abrollkraft bei 0,3 m/min 1,0 N/cm
- Masseauftrag 23 g/m².

### Beispiel 2

Die Folie wird anlag zu Beispiel 1 hergestellt, wobei das Reckverhältnis jedoch bei 1:8 eingestellt wird. Als Rohstoffe für die Basisschicht wird eine Mischung aus 98,9 Gew.-Teilen Moplen HP 501 D, 0,9 Gew.-Teilen Remafingelb HG AE 30 und 0,2 Gew.-Teilen ADK STAB NA-11 UH verwendet. Die Coextrusionsschicht besteht zu 75 Gew.-% aus HTA 108 und zu 25 Gew.-% aus Moplen HP 501 D.

Prüfergebnisse:

| Folieneigenschaften: | |
|---|---|
| Trägerdicke nach Reckung | 64 µm |
| Dicke der Basisschicht | 60 µm |
| Dicke der Coextrusionsschicht | 4 µm |
| Spannung bei 1 % Dehnung | 33 N/mm2 |
| Spannung bei 10 % Dehnung | 246 N/mm2 |
| Zugfestigkeit | 290 N/mm2 |
| Bruchdehnung | 33 % |
| Reibungstest | pass |

Die Folie wird beidseitig coronavorbehandelt und dann auf der Coextrusionsschicht (Oberseite) mit einem Silikontrennlack versehen. Dieser besteht zu 21.800 Gewichtsteilen aus Heptan, zu 3126 Gewichtsteilen aus Dehesive 940A, zu 8 Gewichtsteilen aus Methylbutynol, zu 23 Gewichtsteilen aus Crosslinker V24 und zu 31 Gewichtsteilen aus Catalyst OL. Die Unterseite wird mit einem Primer aus Naturkautschuk, Cyclokautschuk und 4,4'-Diisocyanato-diphenylmethan versehen. Der Klebstoff wird aus 40 Gew.-% Naturkautschuk SMRL (Mooney 70), 10 Gew.-% Titandioxid, 37 Gew.-% eines C₅-Kohlenwasserstoffharzes mit einem R&B-Wert von 95 °C und 1 Gew.-% Antioxidants Vulkanox® BKF in einem Kneter in Hexan gelöst. Die 20 Gew.-%ige Klebemasse wird mit einem Streichbalken die geprimerte Folienunterseite aufgetragen und bei 115°C getrocknet. Anschließend wird das Klebeband zur Mutterrolle gewickelt und zur weiteren Prüfung in 15 mm Breite geschnitten.

Klebtechnische Daten:
- Klebkraft auf Stahl 1,9 N/cm
- Abrollkraft bei 0,3 m/min 0,2 N/cm
- Masseauftrag 24 g/m².

### Vergleichsbeispiel 1

Die Herstellung erfolgt gemäß Beispiel 1, jedoch ohne Coextrusionsschicht.

Prüfergebnisse:

| Folieneigenschaften: | |
|---|---|
| Trägerdicke nach Reckung | 70 µm |
| Spannung bei 1 % Dehnung | 71 N/mm2 |
| Spannung bei 10 % Dehnung | 280 N/mm2 |
| Zugfestigkeit | 317 N/mm2 |
| Bruchdehnung | 7 % |
| Reibungstest | fail |

### Vergleichsbeispiel 2

Die Herstellung erfolgt gemäß Beispiel 2, jedoch hat die Deckschicht die gleiche Zusammensetzung wie die Basisschicht.

Prüfergebnisse:

| Folieneigenschaften: | |
|---|---|
| Trägerdicke nach Reckung | 65 µm |
| Dicke der Basisschicht | 60 µm |
| Dicke der Deckschicht | 5 µm |
| Spannung bei 1 % Dehnung | 37 N/mm2 |
| Spannung bei 10 % Dehnung | 258 N/mm2 |
| Zugfestigkeit | 310 N/mm2 |
| Bruchdehnung | 32 % |
| Reibungstest | fail |

### Vergleichsbeispiel 3

Eine Folie und ein Klebeband werden analog Vergleichsbeispiel 1 aus Dow 7C06 mit einem Reckverhältnis von 1:6,1 hergestellt.

Prüfergebnisse:

| | |
|---|---|
| Trägerdicke nach Reckung | 80 µm |
| Zugfestigkeit | 247 N/mm² |
| Spannung bei 1 % Dehnung | 19 N/mm² |
| Spannung bei 10 % Dehnung | 142 N/mm² |
| Bruchdehnung | 27 % |
| Reibungstest | pass |

### Vergleichsbeispiel 4

Die Herstellung erfolgt gemäß Beispiel 1, jedoch besteht die Coextrusionsschicht aus Dow 7C06.

Prüfergebnisse:

| Folieneigenschaften: | |
|---|---|
| Trägerdicke nach Reckung | 75 µm |
| Dicke der Basisschicht | 70 µm |
| Dicke der Coextrusionsschicht | 5 µm |
| Spannung bei 1 % Dehnung | 72 N/mm2 |
| Zugfestigkeit | 280 N/mm2 |
| Bruchdehnung | 6 % |
| Reibungstest | fail |

## Patentansprüche

1. Trägerfolie insbesondere für ein Klebeband, die monoaxial in Längsrichtung verstreckt ist und die eine Basisschicht aus Polypropylen und eine Coextrusionsschicht aus Polyethylen enthält,
**dadurch gekennzeichnet, dass**
die Spannung in Längsrichtung bei 10 %-Dehnung mindestens 150 N/mm², vorzugsweise mindestens 200 N/mm², besonders bevorzugt mindestens 250 N/mm² beträgt und auf der außen liegenden Seite der Coextrusionsschicht eine Trennlackierung aufgebracht ist.

2. Trägerfolie nach Anspruch 1,
**dadurch gekennzeichnet, dass**
die Trägerfolie
• In Längsrichtung ein Reckverhältnis von mindestens 1:8, vorzugsweise mindestens 1:9,5,
• in Längsrichtung eine Zugfestigkeit von mindestens 300 N/mm², vorzugsweise mindestens 350 N/mm² und/oder
• in Längsrichtung eine Spannung bei 1 %-Dehnung von mindestens 20 *N*/*mm²,* vorzugsweise mindestens 40 N/mm² aufweist.

3. Trägerfolie nach Anspruch 1 oder 2,
**dadurch gekennzeichnet, dass**
die Trägerfolie eine Dicke von 25 bis 200 µm, vorzugsweise 30 bis 140 µm, besonders vorzugsweise 50 bis 90 µm aufweist.

4. Trägerfolie nach zumindest einem der Ansprüche 1 bis 3,
**dadurch gekennzeichnet, dass**
die Basisschicht ein Polypropylen
mit einem Schmelzindex von 0,3 bis 15 g/10 min, vorzugsweise von 0,8 bis 5 g/10 min und/oder
mit einem Biegemodul von mindestens 1600 MPa, vorzugsweise mindestens 2000 MPa enthält.

5. Trägerfolie nach zumindest einem der vorherigen Ansprüche,
**dadurch gekennzeichnet, dass**
das Polypropylen der Basisschicht nucleiert ist.

6. Trägerfolie nach zumindest einem der vorherigen Ansprüche,
**dadurch gekennzeichnet, dass**
der Anteil an Polyethylen in der Coextrusionsschicht zwischen 50 und 100 Gew.-%, vorzugsweise zwischen 60 und 80 Gew.-% liegt.

7. Trägerfolie nach zumindest einem der vorherigen Ansprüche,
**dadurch gekennzeichnet, dass**
das Polyethylen der Coextrusionsschicht ein Homopolymer, vorzugsweise PE-HD ist

8. Trägerfolie nach zumindest einem der vorherigen Ansprüche,
**dadurch gekennzeichnet, dass**
die Dicke der Coextrusionsschicht 3 bis 20 %, vorzugsweise 5 bis 10 % der Gesamtfoliendicke beträgt.

9. Verwendung einer Folie nach zumindest einem der vorherigen Ansprüche als Trägerfolie in einem Klebeband.

10. Verwendung einer Folie nach zumindest einem der vorherigen Ansprüche als Trägerfolie in einem Klebeband insbesondere zur Verstärkung von Kartonagen insbesondere im Bereich von Stanzungen, als Aufreißstreifen für Kartons, als Tragegriff, zur Palettensicherung oder zum Bündeln von Gegenständen.

## Claims

1. Carrier film, in particular for an adhesive tape, which is oriented monoaxially in longitudinal direction and which comprises a base layer of polypropylene and a coextrusion layer of polyethylene,
**characterized in that**
the tension in longitudinal direction at 10% elongation is at least 150 N/mm², preferably at least 200 N/mm², particularly preferably at least 250 N/mm², and a release coating is applied on the external side of the coextrusion layer.

2. Carrier film according to Claim 1,
**characterized in that**
the carrier film
• has a draw ratio in longitudinal direction of at least 1:8, preferably at least 1:9.5,
• has a tensile strength in longitudinal direction of at least 300 N/mm², preferably at least 350 N/mm², and/or
• has a tension in longitudinal direction at 1% elongation of at least 20 N/mm², preferably at least 40 N/mm².

3. Carrier film according to Claim 1 or 2, **characterized in that** the carrier film has a thickness of 25 to 200 µm, preferably 30 to 140 µm, particularly preferably 50 to 90 µm.

4. Carrier film according to at least one of Claims 1 to 3,
**characterized in that**
the base layer comprises a polypropylene having a melt index of 0.3 to 15 g/10 min, preferably of 0.8 to 5 g/10 min, and/or
having a flexural modulus of at least 1600 MPa, preferably at least 2000 MPa.

5. Carrier film according to at least one of the preceding claims,
**characterized in that**
the polypropylene of the base layer is nucleated.

6. Carrier film according to at least one of the preceding claims,
**characterized in that**
the fraction of polyethylene in the coextrusion layer is between 50% and 100% by weight, preferably between 60% and 80% by weight.

7. Carrier film according to at least one of the preceding claims,
**characterized in that**
the polyethylene of the coextrusion layer is a homopolymer, preferably PE-HD.

8. Carrier film according to at least one of the preceding claims,
**characterized in that**
the thickness of the coextrusion layer is 3% to 20%, preferably 5% to 10%, of the total film thickness.

9. Use of a film according to at least one of the preceding claims as a carrier film in an adhesive tape.

10. Use of a film according to at least one of the preceding claims as a carrier film in an adhesive tape particularly for reinforcing cardboard packaging, particularly in the region of die cuts, as a tear-open strip for cartons, as a carry handle, for pallet securement or for bundling articles.

## Revendications

1. Feuille support, en particulier pour une bande adhésive, qui est étirée monoaxialement dans le sens longitudinal et qui contient une couche de base en polypropylène et une couche de coextrusion en polyéthylène, **caractérisée en ce que** la tension dans le sens longitudinal à un allongement de 10% vaut au moins 150 N/mm², de préférence au moins 200 N/mm², de manière particulièrement préférée au moins 250 N/mm² et un agent antiadhésif est appliqué sur la face extérieure de la couche de coextrusion.

2. Feuille support selon la revendication 1, **caractérisée en ce que** la feuille support
- présente, dans le sens longitudinal, un rapport d'étirement d'au moins 1:8, de préférence d'au moins 1:9,5,
- présente, dans le sens longitudinal, une résistance à la traction d'au moins 300 N/mm², de préférence d'au moins 350 N/mm² et/ou
- présente, dans le sens longitudinal, une tension à un allongement de 1% d'au moins 20 N/mm², de préférence d'au moins 40 N/mm².

3. Feuille support selon la revendication 1 ou 2, **caractérisée en ce que** la feuille support présente une épaisseur de 25 à 200 µm, de préférence de 30 à 140 µm, en particulier de préférence de 50 à 90 µm.

4. Feuille support selon au moins l'une quelconque des revendications 1 à 3, **caractérisée en ce que** la couche de base contient un polypropylène
- présentant un indice de fusion de 0,3 à 15 g/10 min, de préférence de 0,8 à 5 g/10 min et/ou
- présentant un module de flexion d'au moins 1600 MPa, de préférence d'au moins 2000 MPa.

5. Feuille support selon au moins l'une quelconque des revendications précédentes, **caractérisée en ce que** le polypropylène de la couche de base est nucléé.

6. Feuille support selon au moins l'une quelconque des revendications précédentes, **caractérisée en ce que** la proportion de polyéthylène dans la couche de coextrusion se situe entre 50 et 100% en poids, de préférence entre 60 et 80% en poids.

7. Feuille support selon au moins l'une quelconque des revendications précédentes, **caractérisée en ce que** le polyéthylène de la couche de coextrusion est un homopolymère, de préférence du PE-HD.

8. Feuille support selon au moins l'une quelconque des revendications précédentes, **caractérisée en ce que** l'épaisseur de la couche de coextrusion représente 3 à 20%, de préférence 5 à 10% de l'épaisseur totale de la feuille.

9. Utilisation d'une feuille selon au moins l'une quelconque des revendications précédentes comme feuille support dans une bande adhésive

10. Utilisation d'une feuille selon au moins l'une quelconque des revendications précédentes comme feuille support dans une bande adhésive, en particulier pour le renforcement de cartonnages, en particulier dans le domaine des découpages, comme bandelette d'arrachage pour cartons, comme poignée de transport, pour assurer les palettes ou pour ficeler des objets.
